Europäisches Patentamt

European Patent Office

Office européen des brevets

(11) Veröffentlichungsnummer: **0 353 669**

**A2**

(12) # EUROPÄISCHE PATENTANMELDUNG

(21) Anmeldenummer: **89114032.9**

(22) Anmeldetag: **29.07.89**

(51) Int. Cl.⁴: **C04B 38/06**

(30) Priorität: **02.08.88 DE 3826220**

(43) Veröffentlichungstag der Anmeldung:
**07.02.90 Patentblatt 90/06**

(84) Benannte Vertragsstaaten:
**DE FR GB IT**

(71) Anmelder: **Hoechst CeramTec
Aktiengesellschaft
Wilhelmstrasse 14
D-8672 Selb(DE)**

Anmelder: **BAYER AG**

**D-5090 Leverkusen 1 Bayerwerk(DE)**

(72) Erfinder: **Hublitz, Richard
Waldstrasse 1
D-8591 Bad Alexandersbad(DE)**
Erfinder: **Birkenstock, Udo, Dr.
Schneppersdelle 2
D-4030 Ratingen(DE)**

(74) Vertreter: **Spiess, Bernhard et al
Hoechst AG Zentrale Patentabteilung
Postfach 80 03 20
D-6230 Frankfurt am Main 80(DE)**

(54) **Verfahren zur Herstellung keramischer Formkörper.**

(57) Zur Herstellung poröser keramischer Formkörper, wie z.B. Zylinder oder Ringe, stellt man aus Wasser, einem keramischen Pulver, z.B. Steatit, einem organischem Ausbrennstoff, Bindemittel und gegebenenfalls Gleitmittel ein rieselfähiges Gemisch her und verformt es unter Druck. Der Formling wird getrocknet und unter Zerstörung des organischen Ausbrennstoffes gebrannt. Als Ausbrennstoff wird Kokosschalen-Granulat oder Cellulose-Granulat verwendet. Die erhaltenen Keramikkörper können als Katalysatorträger eingesetzt werden.

## Verfahren zur Herstellung keramischer Formkörper

Die Erfindung betrifft ein Verfahren zur rationellen Herstellung von porösen, keramischen Formlingen, die sich als Katalysatorträger eignen.

Katalysatorträger sind poröse Festkörper, die als Gerüstsubstanz für die Tränkung mit katalytisch wirksamen Massen dienen. Diese Gerüstsubstanz darf keine katalytischen Nebenwirkungen entfalten. Sie soll nicht mit der durch Tränkung später aufgebrachten katalytisch wirksamen Masse reagieren. Für Gasreaktionen soll außerdem eine Porenstruktur vorhanden sein, die eine gleichmäßige Beladung durch Tränken oder Beschichten ermöglicht und später eine rasche Gasdiffusion von der Granalienoberfläche zu den aktiven Zentren im Innern der Granalien und umgekehrt gewährleistet. Härte und Abriebsbeständigkeit spielen insbesondere bei Katalysatoren für das Fließbettverfahren eine wichtige Rolle.

Für das Fließbettverfahren werden hauptsächlich Katalysatoren in Kugelform eingesetzt. Im Festbett verwendet man einfacher herzustellende zylinderförmige oder hohlzylinderförmige Körper.

Die Verwendung von sehr groben Ausbrennstoffen, wie Sägemehl, Korkstücken, Weizengries oder Torf zur Herstellung von porösen keramischen Massen ist bekannt (Ber. d. Deut. Keram. Ges. Bd. 37, 1960, 12 - 15). Der Einsatz von pulverförmiger Stärke als Ausbrennstoff ist bekannt aus der DE-OS 30 01 640 und der DD-PS 52 301. Für manche katalytische Zwecke sind die durch Stärke erzeugbaren Poren jedoch zu klein.

Aus der DE-OS 22 56 849 ist ein Verfahren zur Herstellung von Aluminiumoxid-Formkörpern bekannt, bei dem ein faserartiger verbrennbarer organischer Zusatzstoff als Porenbildner verwendet wird und zu Poren mit einer Porengröße im Bereich von 8 bis $17,5 \times 10^{-6}$ cm führt. Als faserartiger Zusatzstoff wird insbesondere Cellulose vorgeschlagen. Es hat sich jedoch gezeigt, daß für den vorliegenden Zweck langgestreckte Poren ungünstig sind, weil gleichzeitig die Porendurchmesser zu gering sind.

Zur Reformierung von Kohlenwasserstoffen wird in der DE-OS 24 41 420 ein Katalysator vorgeschlagen, der bestimmte aktive Substanzen auf einem Aluminiumoxid-Träger enthält, der Poren im Bereich von 2 bis $7 \times 10^{-5}$ cm aufweist. Auch hier werden die Poren durch Verwendung organischer Ausbrennstoffe wie Polysaccharide, Stärken, Cellulosen erzeugt. Die so hergestellten Aluminiumoxidträger können auf einer Tablettenpresse verformt werden. Nachteilig an diesem Verfahren ist der zu kleine Porendurchmesser.

Es bestand daher die Aufgabe, ein Verfahren zu schaffen, mit dem in einfacher Weise inerte Formkörper mit makroporöser offener Porenstruktur mit Porengrößen zwischen 50 und 2 000 $\mu$m, insbesondere zwischen 50 bis 800 $\mu$m hergestellt werden können. Vorzugsweise sollten die so erzeugten Körper eine Wasseraufnahme zwischen 10 und 50 Gew.-% und ferner ein spezifische Oberfläche unter 0,1 m²/g aufweisen.

Es wurde nun ein Verfahren zur Herstellung poröser keramischer Formkörper gefunden, bei dem man aus Wasser, einem keramischen Pulver, einem organischem Ausbrennstoff, Bindemittel und gegebenenfalls Gleitmittel ein rieselfähiges Gemisch herstellt, dieses unter Druck verformt, den Formling trocknet und unter Zerstörung des organischen Ausbrennstoffes brennt, das dadurch gekennzeichnet ist, daß als Ausbrennstoff Kokosschalen-Granulat und/oder Cellulose-Granulat verwendet wird.

Die erzeugte Porengröße entspricht etwa der Korngröße des eingesetzten Ausbrennstoffes, das erzeugte Porenvolumen etwa dem Volumen des Ausbrennstoffes.

Der eingesetzte keramische Stoff muß sinterfähig sein, oder sich durch Sintern herstellen lassen. Beispielsweise sind poröse Formkörper aus Porzellan, Steinzeug, Cordierit, Forsterit, Aluminiumoxid, Bariumsteatit, Zirkonoxid, Zirkonsilikat, Magnesiumoxid und Mullit herstellbar. Die Herstellung dieser keramischen Stoffe aus den Ausgangsmaterialien ist dem Fachmann bekannt. Bevorzugt ist die Herstellung von Steatit-Formkörpern. Das eingesetzte keramische Produkt, (im Falle der Herstellung eines porösen Steatitkörpers beispielsweise ein Gemisch aus Feldspat, Ton und Speckstein) soll mittlere Korngrößen von 0,5 $\mu$m bis 0,1 mm aufweisen.

An das Bindemittel wurden keine besonderen Anforderungen gestellt. Beispielsweise lassen sich Harze, Polyvinylbutyral, gekochte Stärke oder Methylcellulose verwenden.

Das Verformen unter Druck geschieht vorteilhafterweise auf einer Tablettierpresse. Dabei lassen sich Formkörper exakter Form und einheitlicher Abmessungen erhalten. Dagegen weisen Träger, die durch Extrudieren keramischer plastischer Massen hergestellt wurden, keine konstanten Formen und Abmessungen auf. Kugelähnliche Formkörper, die durch Pelletherstellung nach dem Prinzip der Aufbauagglomerierung gewonnen wurden, genügen ebenfalls nur geringen Ansprüchen an Maßgenauigkeit.

Durch Verpressen lassen sich nahezu alle Formen, wie Zylinder, Kugeln, Lochkugeln, Linsen, Ringe, Halbringe, Sattelkörper usw. herstellen. Die exakt reproduzierbare Form gewährleistet, daß Reaktorrohre auch kleiner Abmessungen gleichmäßig füllbar sind.

Um die Abriebsfestigkeit der gewonnenen keramischen Träger zu erhöhen, ist es vorteilhaft, die Formkörper zu scheuern, und so lose anhaftende Anteile zu entfernen.

Die erfindungsgemäß hergestellten Körper können (nach Aufbringung der katalytisch aktiven Substanzen) als Katalysatoren, beispielsweise für Oxidations- und Reduktionsprozesse oder Gasreinigungsverfahren, verwendet werden. Ohne Auftragen katalytischer Massen können sie als Füllkörper Verwendung finden.

Es ist auch möglich, Formkörper herzustellen, die eine Beschichtung aus Kieselsol und/oder Wasserglas und gegebenenfalls feinpulvriger wasserunlöslicher Kieselsäure und/oder Porosierungsmitteln gemäß DE-OS 32 00 483 aufweisen. Vorzugsweise kann man dabei so vorgehen, daß man den gebrannten Formling beschichtet und trocknet.

Der eingesetzte organische Ausbrennstoff soll eine mittlere Korngröße zwischen 0,1 und 1 mm aufweisen. Bekannte Ausbrennstoffe wie Sägemehl zeigen entweder eine ungünstige Korngrößenverteilung, ungünstige Aschenwerte oder elastisches Verhalten, so daß die tablettierten Grünkörper nicht mechanisch beständig sind.

Durch den erfindungsgemäßen Einsatz der Ausbrennstoffe Kokosnußschalengranulat und Cellulosegranulat in definierten Korngrößen entstehen nach dem keramischen Brand ausgesprochen grob poröse Träger, bei denen keine Mikroporen vorhanden sind. Die Poren sind überwiegend kavernenartig und nicht wie bei Verwendung von faserartigen Ausbrennstoffen kanalartig. Dadurch ergeben sich sehr gute Tränk- oder Beschichtungs-Eigenschaften.

Die bei Verwendung anderer, faseriger oder plättchenförmiger Ausbrennstoffe auftretende Quellung (Rückfederung) und Schichtenbildung unterbleibt.

Besonders vorteilhaft ist die gemeinsame Verwendung von Kokosnußschalen-Granulat und Cellulose-Granulat, insbesondere in Gewichtsverhältnissen von 4:6 bis 6:4. In diesem Fall resultieren besonders gute Preßeigenschaften. Das Preßgranulat, bestehend aus den Einzelkomponenten Steatit-Sprühgranulat, Kokosnußschalen- und Cellulosegranulat, hat ausgezeichnete Rieselfähigkeit. Die Füllung der Preßwerkzeuge ist optimal, da alle 3 Komponenten im annähernd gleichen Kornspektrum liegen. Die Formkörper weisen nach dem Brennen eine homogene Porenverteilung zwischen 50 und 800 μm auf.

Die elastischen Eigenschaften des Cellulosegranulats in Verbindung mit dem harten Kokosnußschalengranulat und dem plastischen Steatit-Sprühkorn ergeben beim Pressen eine gute Verzahnung, so daß die Preßlinge gut verfestigt werden und formstabil bleiben.

Die Ausbrennstoffe Kokosnuß- und Cellulosegranulat haben unterschiedliche thermische Zersetzungspunkte. Dadurch wird das bei Einstoffsystemen häufig auftretende Zerreissen der Formkörper in der Aufheizphase (beim Brennen) vermieden.

Die Erfindung wird durch die Beispiele näher erläutert.

## Beispiel 1

Steatit-Pulver der Korngröße 0,5-100 μm wird mit 0,3 % Methylcellulose vermischt, mit Wasser angeteigt und sprühgetrocknet. Die Siebfraktion von 0,1 bis 0,8 mm wird verwendet; Überkorn und Unterkorn werden zurückgeführt.

100 Gew.-Teile dieses Steatit-Sprühgranulats werden mit 40 Gew.-Teilen Kokosnuß (Schalen)-Granulat der Kornfraktion 0,2 bis 0,4 mm, 5 Gew.-Teilen Stanzöl und 1,5 Gew.-Teilen Wasser vermischt. Die Masse wird zu Kugeln mit einem Durchmesser von 6 mm auf der Tablettenpresse verpreßt.

Das verwendete Preßgranulat ist gut rieselfähig. Es kommt zu keinem Ankleben an der Apparatur. Die gepreßten Kugeln werden in keramischen Brennöfen bei SK12 bis SK14 gebrannt. Sie zeigen dann eine Wasseraufnahme von 30 Gew.-% und ein Schüttgewicht von 850 - 900 g/l.

## Beispiel 2

100 Gew.-Teile Steatit-Sprühgranulat von Beispiel 1
20 Gew.-Teile Kokosnußschalengranulat 0,2 bis 0,4 mm
20 Gew.-Teile Cellulosegranulat, mittlerer Korndurchmesser 0,25 mm
2 Gew.-Teile Stanzöl
2 Gew.-Teile Wasser
werden wie in Beispiel 1 vermischt und in ein Preßgranulat überführt. Hieraus wurden 6 mm-Kugeln, wie in Beispiel 1, gepreßt und diese gebrannt. Wasseraufnahme nach dem Brand: 30 %
Aus der gleichen Masse wurden Keramik-Ringe (Höhe 6 mm, Durchmesser außen 6 mm, innen 4 mm) hergestellt, die eine Wasseraufnahme (nach dem Brand) von 28 % aufweisen.

## Beispiel 3

100 Gew.-Teile Steatit-Sprühgranulat, wie Beispiel 1
10 Gew.-Teile Kokosnußgranulat 0,2 bis 0,4 mm
10 Gew.-Teile Cellulosegranulat, Korndurchmesser ca. 0,25 mm
2 Gew.-Teile Stanzöl

2 Gew.-Teile Wasser
wurden wie in Beispiel 1 vermischt und in ein Preßgranulat überführt. Hieraus wurden wie in Beispiel 2 Ringe hergestellt. Wasseraufnahme nach dem Brand: 16 %.

**Ansprüche**

1. Verfahren zur Herstellung poröser keramischer Formkörper, wobei man aus Wasser, einem keramischen Pulver, organischem Ausbrennstoff, Bindemittel und gegebenenfalls Gleitmittel ein rieselfähiges Gemisch herstellt, dieses unter Druck verformt, den Formling trocknet und unter Zerstörung des organischen Ausbrennstoffes brennt, dadurch gekennzeichnet, daß als Ausbrennstoff Kokosschalen-Granulat und/oder Cellulose-Granulat verwendet wird.

2. Verfahren nach Anspruch 1, dadurch gekennzeichnet, daß das Gemisch zu Kugeln, Zylindern, Sattelkörpern oder Ringen verformt wird.

3. Verfahren nach Anspruch 1, dadurch gekennzeichnet, daß man nach dem Brennen die keramischen Formkörper scheuert, um lose anhaftende Anteile zu entfernen.

4. Verfahren zur Herstellung von porösen kieselsäurehaltigen Formkörpern, bei dem man ein Gemisch enthaltend Wasser, Kieselsol und/oder Wasserglas und gegebenenfalls feinpulvrige, wasserunlösliche Kieselsäure und/oder Porosierungsmittel auf einen porösen keramischen Formkörper aufbringt, man dabei die Temperatur der anorganischen Grundmasse höher hält als die Siedetemperatur des Wassers und man das Gemisch so zugibt, daß das Wasser schnell verdampft und der Wassergehalt der anorganischen Grundmasse stets unter 5 Gew.-% beträgt, dadurch gekennzeichnet, daß man zur Herstellung des porösen keramischen Formkörpers ein rieselfähiges Gemisch aus Wasser, feinverteiltem keramischem Produkt, organischem Ausbrennstoff, Bindemittel und gegebenenfalls Gleitmittel herstellt, verformt, den Formling trocknet und unter Zerstörung des anorganischen Ausbrennstoffes brennt.

5. Verfahren nach Anspruch 4, dadurch gekennzeichnet, daß der Ausbrennstoff ausgewählt wird aus der Gruppe bestehend aus Kokosnuß-Granulat und Cellulose-Granulat.

6. Verfahren nach Anspruch 1 oder 4, dadurch gekennzeichnet, daß das eingesetzte keramische Produkt Steatit ist.

7. Verfahren nach Anspruch 1 oder 4, dadurch gekennzeichnet, daß die Verformung durch eine Tablettenpresse geschieht.

8. Verfahren nach Anspruch 1 oder 4, dadurch gekennzeichnet, daß die eingesetzten organischen Ausbrennstoffe eine mittlere Korngröße zwischen 0,05 und 2 mm, insbesondere 0,05 und 0,8 mm aufweisen.

9. Verfahren nach Anspruch 1 oder 4, dadurch gekennzeichnet, daß das eingesetzte keramische Produkt eine mittlere Korngröße von 0,05 bis 100 $\mu$m aufweist.

10. Verwendung der gemäß Anspruch 1 oder 4 hergestellten Formkörper als Katalysatorträger.